Europäisches Patentamt

European Patent Office

Office européen des brevets

(19)

(11) Veröffentlichungsnummer : **0 091 449**
B1

(12) **EUROPÄISCHE PATENTSCHRIFT**

(45) Veröffentlichungstag der Patentschrift :
04.05.88

(21) Anmeldenummer : 82903035.2

(22) Anmeldetag : 15.10.82

(86) Internationale Anmeldenummer :
PCT/CH 82/00112

(87) Internationale Veröffentlichungsnummer :
WO/8301495 (28.04.83 Gazette 83/10)

(51) Int. Cl.⁴ : **F 16 F 15/00**, F 16 M 1/00,
A 47 C 23/00, E 02 B 3/22,
E 01 F 15/00, F 16 L 3/20

(54) FEDERELEMENT.

(30) Priorität : 19.10.81 CH 6671/81

(43) Veröffentlichungstag der Anmeldung :
19.10.83 Patentblatt 83/42

(45) Bekanntmachung des Hinweises auf die Patenterteilung : 04.05.88 Patentblatt 88/18

(84) Benannte Vertragsstaaten :
AT BE CH DE FR GB LI LU NL SE

(56) Entgegenhaltungen :
CH-A-   216 650
CH-A-   434 614
DE-A- 2 821 349
DE-C-   359 796
DE-C-   743 189
FR-A-   491 308
FR-A- 1 474 321
FR-A- 1 597 690
FR-A- 2 070 278
FR-A- 2 362 308
GB-A-   565 723
GB-A- 1 171 276
US-A- 2 559 251
US-A- 2 892 315
US-A- 3 173 270

(73) Patentinhaber : KEOWN, Jack B
Hägelerstrasse 71
CH-5400 Baden (CH)

(72) Erfinder : KEOWN, Jack B
Hägelerstrasse 71
CH-5400 Baden (CH)

(74) Vertreter : Büchel, Kurt F., Dr.
Patentanwalt Dr. Kurt F. Büchel Bergstrasse 297
FL-9495 Triesen (LI)

Jouve, 18, rue St-Denis, 75001 Paris, France

EP 0 091 449 B1

## Beschreibung

Die Erfindung betrifft ein Federelement zum federnden Abstützen von Kräften.

Bei bekannten Federelementen, die aus zwei oder mehr elastisch federnden Gliedern zusammengesetzt sind, ist eine Anordnung der Glieder in der Weise vorgesehen, dass die Glieder übereinanderliegen, so dass das obere Glied auf einem unteren Glied oder auf zwei, bzw. mehreren unteren Gliedern abgestützt ist. Diese Anordnung bringt es zwangsläufig mit sich, dass als Federweg nur ein Teil der Bauhöhe des Federelements ausgenützt werden kann, da die Glieder selbst bei ihrer geringsten Ausdehnung einen Teil der Bauhöhe beanspruchen, der dadurch als Federweg nicht mehr ausgenützt werden kann. Dieser Nachteil trifft auch dann zu, wenn mehrere Federelemente zur Bildung einer Federvorrichtung, z. B. in Form einer federnden Fläche, nebeneinander angeordnet werden.

Man hat auch schon vorgeschlagen, an den Endpunkten eines mittig gelagerten Federhebels wiederum die Mittelpunkte eines weiteren Federhebels zu befestigen usw., wodurch ein verzweigtes Federelement entsteht, das aber die Gefahr mit sich bringt, dass bei einer punktförmigen Belastung die nach Art einer Waage stets nur in der Mitte des Hebels befestigten Glieder um diesen Mittelpunkt verschwenkt werden und so der Belastung ausweichen.

Aus der GB-A-1171276 (Hero) ist eine federnde Unterlage für Matratzen in Form eines Lattenrostes. Die elastischen Längslatten sind an ihren Unterseiten mit den Querlatten durch Verkleben miteinander verbunden. Unterhalb des Lattenrostes verlaufen über dessen ganze Länge zwischen benachbarten Längslatten und parallel zu diesen ebenfalls elastische, jedoch gewellte Verbindungslatten. Jede Verbindungslatte ist mit ihrem Wellenberg mit jeder zweiten Querlatte über ein Verbindungsstück verbunden. Zwischen zwei durch eine Verbindungslatte verbundenen Querlatten stützt sich die Verbindungslatte mit ihren Wellentälern gegen eine feste Unterlage ab. Die Verbindungsstücke ermöglichen bei Belastung der federnden Unterlage eine Längsverschiebung der Verbindungslatten in diesen Verbindungsstücken gegenüber dem Rost aus Längs- und Querlatten. Die Unterlage weist infolge dieser Ausbildung eine gleichmässige Elastizität über ihre gesamte Fläche auf und kann durch nur in einem Teilbereich der Fläche angreifende Kräfte nicht beschädigt werden. Auf Grund des Aufbaues ist somit die Federwirkung dieser bekannten Federunterlage im wesentlichen auf die gewellten Verbindungslatten beschränkt, die bei Belastung flach gebogen werden. Die Federcharakteristik ist in der Folge sehr weich, wobei es zwangsläufig zu einem Längsverschieben der Latten kommt, was durch zusätzliche Puffer gedämpft werden muss. Das Herstellen von gewellten elastischen Verbindungslatten ist darüber hinaus nicht bei allen Werkstoffen problemlos möglich. Ausserdem kommt es bei vollständiger Kompression der Unterlage zu einem Aufeinanderliegen der einzelnen Elemente, wodurch deren Bauhöhe nicht voll ausgenutzt werden kann.

Eine andere Konstruktion ist aus den US-A-2,892,315 und US-A-3,173,270 (Blancato) bekannt geworden. Dabei wird ein Gitter entlang einer schrägen Bahn entgegen der Schwerkraft nach oben geschoben, woraus sich die Federwirkung für einen Fender an der Kaimauer ergibt. Das Gitter selbst ist starr und ohne federnde Wirkung.

Schliesslich ist ein eben solches starres Gitter auch in der FR-A-2362308 (Commissariat) vorgeschlagen worden, das aber in Wirklichkeit nicht als Feder, sondern als Dämpfer wirkt, wobei die Stäbe als Rohre ausgebildet sind, die sich unter Stossbelastung (unelastisch) deformieren.

Der Erfindung liegt somit die Aufgabe zugrunde, ein Federelement so auszugestalten, dass fast die ganze Bauhöhe als Federweg ausgenützt, die Federcharakteristik trotz geringer Bauhöhe in weitem Bereich den jeweiligen Anforderungen angepasst und die Ausnützung der gesamten Bauhöhe als Federweg auch bei Bildung von aus Federelementen zusammengesetzten Federvorrichtungen eingehalten werden kann. Darüber hinaus soll das erfindungsgemässe Federelement der abzufedernden Kraft eine möglichst einheitliche Stützkraft entgegenbringen, und zwar unabhängig davon, ob es sich um eine eher punktförmige Kraft oder eine eher auf eine grössere Fläche verteilt wirkende Kraft handelt.

Gelöst werden die Aufgaben durch die Merkmale des Anspruches 1.

Unter « Endpunkte » sind hier die Endpunkte eines verbundenen Stabes in Bezug auf einen Stabzug zu verstehen. Wie in den Unteransprüchen, aus denen sich weitere Varianten und Vorteile ergeben, gezeigt wird, können mehrere Stabzüge auch leiterförmig aneinander gereiht sein, wobei in einzelnen Ausführungsformen beispielsweise die verbundenen Stäbe durchgehend über mehrere Stabzüge verlaufen. In einer solchen Ausbildung liegt dann der Endpunkt eines verbundenen Stabes in einem Stabzug unmittelbar neben dem Endpunkt des verbundenen Stabes im benachbarten Stabzug, oder fällt mit diesem Endpunkt sogar zusammen.

Die Erfindung ist in der Zeichnung in verschiedenen Ausführungsformen beispielhaft dargestellt und nachstehend beschrieben. Es zeigen :

Fig. 1 ein als Grundelement ausgebildetes Federelement in räumlicher Darstellung ;

Fig. 2 ein weiteres als Grundelement ausgebildetes Federelement in räumlicher Darstellung ;

Fig. 3 eine Variante des Grundelementes nach Fig. 1 oder 2 in räumlicher Darstellung, wobei die Glieder des Federelementes in einer Ebene liegen ;

Fig. 4 ein Grundelement in räumlicher Darstellung, dessen Glieder in zwei Ebenen angeordnet sind ;

Fig. 5 eine aus zwei Federelementen nach Fig. 1 zusammengesetzte Federvorrichtung in räumlicher Darstellung ;

Fig. 6 die Federvorrichtung nach Fig. 5 ausgebildet als Leitplanke mit elastischen Stützgliedern in räumlicher Darstellung ;

Fig. 7 eine Federvorrichtung aus in Serie angeordneten, starr gelagerten Federelementen nach Fig. 2 in räumlicher Darstellung ;

Fig. 8 eine aus vier Federelementen nach Fig. 1 gebildete Federvorrichtung in räumlicher Darstellung ;

Fig. 9 eine Federvorrichtung ähnlich Fig. 8, als Untermatratze ausgebildet, in räumlicher Darstellung ;

Fig. 10 einen Schnitt längs der Linie X-X in Fig. 9 ;

Fig. 11 einen Schnitt ähnlich Fig. 10, jedoch mit zusammengelegten Stützleisten und

Fig. 12 einen Schnitt einer Variante einer Untermatratze.

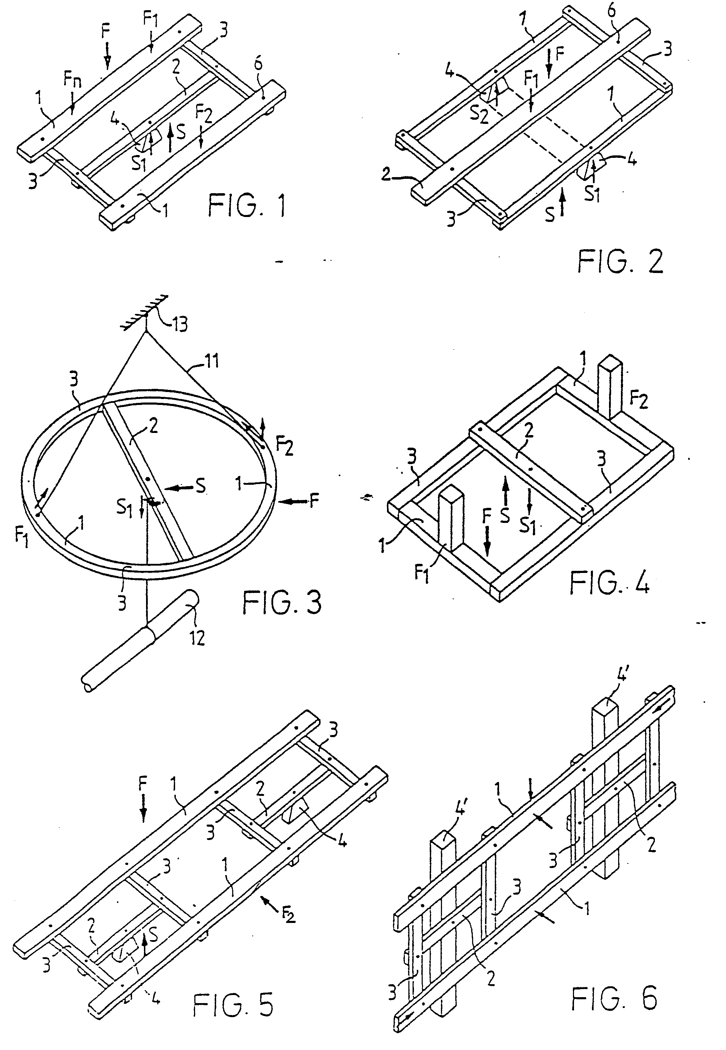

Das in Fig. 1 dargestellte Federelement kann als Grundelement bezeichnet werden, da es die kleinste Zahl von Gliedern aufweist, die beim erfindungsgemässen Federelement möglich sind.

Es besteht — wie ersichtlich — aus einem geschlossenen Stabzug, im gegenständlichen Fall aus einem Rechteck, dessen vier Seiten von zwei einander gegenüberliegenden verbindenden Stäben 1, bzw. zwei einander gegenüberliegenden, mittels eines Verbindungsstabes 2 verbundenen Stäben 3 gebildet sind. Das Federelement ist an der Mitte seines Verbindungsstabes 2 auf einem Lagersockel 4 abgestützt, an dem die Stützkraft S angreift. An den verbindenden Stäben 1 greift die abzufedernde Kraft F an. An dieser bewegbaren Kraftangriffseite kann eine beliebige Anzahl von Kraftangriffspunkten F1, F2, ... FN vorgesehen werden, an denen entsprechende Kräfte angreifen können. Im Beispiel der Fig. 1 sind die verbindenden Stäbe 1 stärker und damit weniger elastisch ausgebildet als die verbundenen Stäbe 3 und der Verbindungsstab 2 ; im Extremfall könnten die verbindenden Stäbe 1 auch starr ausgebildet sein.

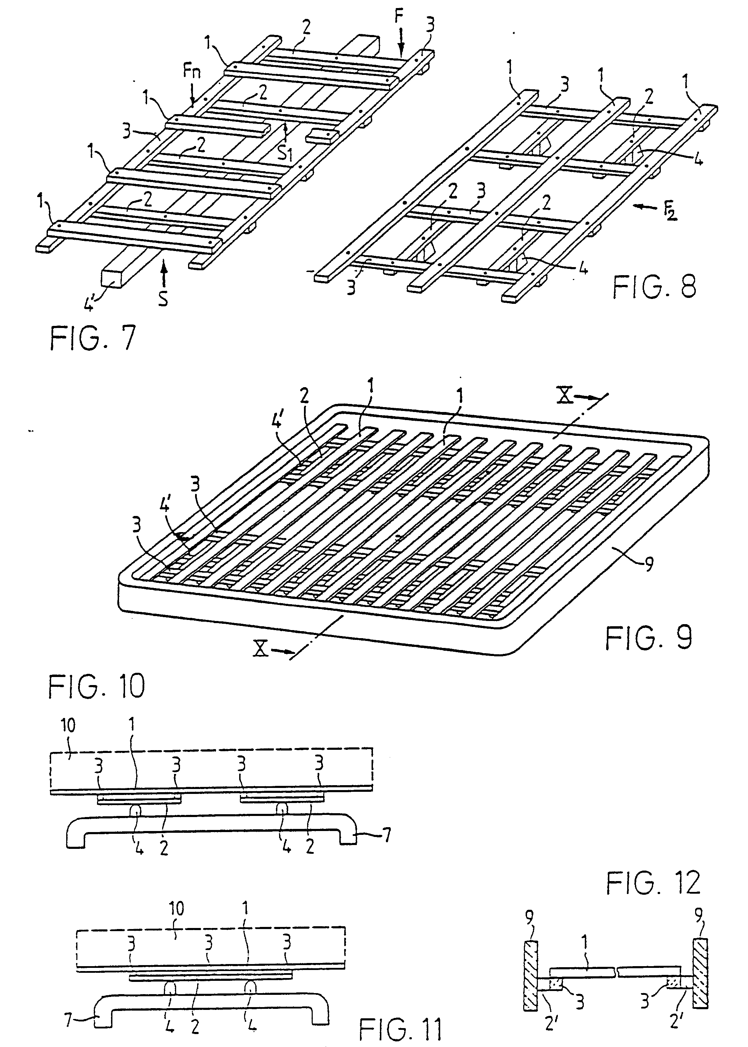

In Fig. 2 sind zwei Lagersockel 4 vorgesehen, an denen sich die beiden verbindenden Stäbe 1, die hier schwächer als der Verbindungsstab 2 ausgebildet sind, abgestützt werden. An Stelle der beiden Lagersockel 4 könnte auch ein einziger länglicher Lagersockel verwendet werden, wie dies gestrichelt angedeutet ist und in den Fig. 7 und 9 später noch beschrieben werden wird.

Das erfindungsgemässe Federelement funktioniert nun wie folgt : bei Aufbringen einer Kraft F auf die Oberseite des in Fig. 1 dargestellten Elementes wird der Verbindungsstab 2 zu beiden Seiten seiner mittigen Lagerung nach unten gebogen. Dadurch verkürzt sich der Abstand seiner Endpunkte, die an der Mitte der verbundenen Stäbe 3 befestigt sind. Die Mittelpunkte der elastisch ausgebildeten, verbundenen Stäbe 3 folgen daher einerseits den Endpunkten des Verbindungsstabes 2 nach unten, aber — auf das Federelement bezogen — auch nach innen, während die Endpunkte der verbundenen Stäbe 3 an den wesentlich weniger elastisch ausgebildeten oder sogar starren verbindenden Stäben 1 befestigt sind. Die verbundenen Stäbe 3 unterliegen daher sowohl einer Biegung als auch einer Torsion. Der Federweg des erfindungsgemässen Federelementes, den ein beispielsweise auf den verbindenden Stäben 1 abgestellter Körper zurücklegen kann, entspricht der Summe der Stärken eines verbindenden Stabes 1 und eines verbundenen Stabes 3, bis nämlich der sich zwischen den beiden verbindenden Stäben 1 auf angenommen gleicher Höhe befindende Boden des hier nicht gezeigten Körpers auf der Oberseite des Verbindungsstabes 2 aufsitzt.

In ähnlicher Weise wirkt das Federelement nach Fig. 2, wobei der Federweg bei punktförmiger Belastung eines Kraftangriffspunktes F1 nicht nur der Summe der Stärken eines verbindenden Stabes 1 und eines verbundenen Stabes 3, sondern zuzüglich der Höhe des Lagersockels 4 entspricht.

In Fig. 1 und 2 sind mit Punkten 6 feste Verbindungen angedeutet, mit denen die Teile des Federelementes zusammengehalten sind. Es ist jedoch auch möglich und kann für bestimmte Anwendungsfälle zweckmässig sein, zwischen den Gliedern des Federelementes Abstandhalter anzubringen, die selbst fest ausgebildet sein können.

Bei den Federelementen nach Fig. 1 und 2 liegen die Teile in drei Ebenen. Wie Fig. 3 zeigt, können diese Teile aber auch in eine einzige Ebene gelegt werden, ohne dass der grundsätzliche Aufbau des Federelementes geändert wird. Das Federelement nach Fig. 3 entspricht etwa demjenigen nach Fig. 1 und ist mit den entsprechenden Bezugszeichen versehen. Die einzelnen Glieder gehen hier ineinander über und dementsprechend liegen die beiden Kraftangriffseiten S, F praktisch in derselben Ebene. Ein solches Federelement kann beispielsweise zur federnden Aufhängung einer Rohrleitung benützt werden, wobei das Federelement an den Kraftangriffpunkten F1, F2, z. B. an einer Decke 13 gelagert ist, z. B. durch ein elastisches Gabelstück 11, während die Rohrleitung 12 am Kraftangriffpunkt S1 angehängt ist.

Fig. 4 zeigt dasselbe Federelement wie in Fig 3, jedoch liegen die Teile desselben in zwei verschiedenen Ebenen. Die eine Ebene wird gebildet durch die beiden verbindenden Stäbe 1 (mit Kraftangriffspunkten auf den Sockeln F1 und F2) und die beiden verbundenen Stäbe 3, während in der zweiten Ebene nur der Verbindungsstab 2 liegt.

Insbesondere dann, wenn — wie oben erwähnt — die Befestigung des Verbindungsstabes 2 an einem von den Endpunkten des verbundenen Stabes 3 im Abstand befindlichen Punkt, vorzugsweise im Mittelpunkt, beweglich erfolgt, können auch die verbundenen Stäbe 3 weniger elastisch oder sogar starr ausgebildet werden, wenn ausserdem sowohl die verbundenen Stäbe 1 als auch der Verbindungsstab 2 biegeelastisch in gleicher Weise belastet werden, so dass sowohl die Mittel als auch die Endpunkte der verbundenen Stäbe 3 um einen annähernd gleichen Betrag nach innen wandern.

Erfindungswesentlich für die Ausführung der Federelemente nach den Fig. 1 bis 4 ist einerseits die im Kennzeichen des Anspruches 1 beschriebene Anordnung der Stäbe zueinander, andererseits der Kraftangriff. Durch die versetzte Anordnung wird erreicht, dass bei Belastung der Federelemente wegen der unterschiedlichen Verformung im Falle einer starren Verbindung die verbundenen Stäbe 3 tordiert und gebogen werden. Die Federcharakteristik eines solchen Elementes kann durch die Dimensionierung der Stäbe selbst, sowie ihrer Anordnung, bzw. durch die Materialwahl in weiten Grenzen den jeweiligen Anforderungen angepasst werden.

Werden mehrere Grundelemente miteinander vereinigt, so können Federelemente beliebiger Grösse und Form gebildet werden. Fig. 5 zeigt eine solche Federvorrichtung, die aus zwei Grundelementen nach Fig. 1 zusammengesetzt ist ; es sind mehrere geschlossene Stabzüge 1, 3, 1, 3 leiterartig aneinandergereiht, wobei zwei benachbarte Stabzüge jeweils einen verbundenen Stab 3 gemeinsam haben und die verbindenden Stäbe 1 als Leiternholme durchgehen. Die beiden, sich über die beiden Grundelemente erstreckenden verbindenden Stäbe 1 bilden eine bewegbare Kraftangriffseite F von verhältnismässig grosser Fläche. Dementsprechend kann hier eine viel grössere Anzahl von Kraftangriffspunkten vorgesehen werden. Im Hinblick auf die besondere Ausführungsform ist zu beachten, dass die Querstabilität, d. h. quer zu den verbindenden Stäben 1, verhältnismässig gering ist. Dagegen ist die Längsstabilität gross und es können dadurch grosse Kräfte aufgenommen werden. Allerdings ist zu bemerken, dass in Abhängigkeit von der Stabilität der Verankerung der beiden Lagersockel 4 das erfindungsgemässe Federelement auch eine Federwirkung quer zu den verbindenden Stäben 1 besitzt, wobei bei Krafteinwirkung in der Ebene des Federelementes der Verbindungsstab 2 um seinen Befestigungspunkt auf dem Lagersockel 4 in der Ebene des Federelementes gebogen, bzw. bei schräg von oben auftretender Kraft noch zusätzlich nach unten gedrückt und damit tordiert wird.

Werden bei der Federvorrichtung nach Fig. 5 die Lagersockel 4 durch Balken 4' ersetzt und diese für die Aufstellung der Federvorrichtung in vertikaler Lage benützt, so erhält man die Federvorrichtung nach Fig. 6, die z. B. als Sicherheitsplanke Verwendung finden kann.

Werden mehrere Grundelemente nach Fig. 1 in Linie angeordnet, so erhält man eine Federvorrichtung nach Fig. 7. Der Lagersockel 4 bildet hier einen durchgehenden Lagerbalken 4', auf dem mehrere Verbindungsstäbe 2 angeordnet sind. Bei dem hier dargestellten Beispiel werden die Leiternholme daher von den verbundenen Stäben 3 gebildet, während zwei benachbarte Kurvenzüge jeweils einen verbindenden Stab 1 gemeinsam haben.

Während die Verbindungsstäbe 2 nur je einen Kraftangriffspunkt S1 aufweisen, können auf den verbindenden Stäben 1 beliebige Kraftangriffspunkte FN vorgesehen werden.

Werden die Grundelemente nach Fig. 1 gemäss Fig. 5 und 7 angeordnet, erhält man eine Federvorrichtung nach Fig. 8. Dort sind zwei Grundelemente hintereinander zu einer Ausführung nach Fig. 7 angeordnet. Zwei solche Ausführungen nebeneinander angeordnet ergeben die Federvorrichtung nach Fig. 8, wobei ausser den verbundenen Stäben 3 auch die verbindenden Stäbe 1 durchlaufend ausgebildet sind. Es sind hier zwei Folgen leiterartig aneinandergereihter Stabzüge 1, 3, 1, 3, in der Fläche so angeordnet, dass zwei benachbarte Leiterfolgen jeweils einen durchgehenden verbundenen Stab 3 und verbindenden Stab 1 gemeinsam haben.

Eine solche Federvorrichtung als Untermatratze für ein Bett zeigt Fig. 9 und der dazugehörige Schnitt Fig. 10. Die Federkonstruktion nach Fig. 9 weist zwei als Balken ausgebildete Lagersockel 4 auf, die auf einem Lagerfuss 7 angeordnet sind. Auf den Lagersockeln 4 sind die Verbindungsstäbe 2 und unter Zwischenlage der verbundenen Stäbe 3 die verbindenden Stäbe 1 befestigt. Ein eine Matratze 10 umgebender Rahmen 9 ist entweder frei am Lagerfuss 7 abgestützt (Fig. 10, 11) oder mit den am Rand der verbindenden Stäbe 1 angeordneten verbundenen Stäbe 3 zwischen den verbindenden Stäben 1 mit Klötzen 2' verbunden (Fig. 12).

Die Federvorrichtung nach Fig. 9 kann dadurch etwas variiert werden, dass die beiden mittleren verbundenen Stäbe 3 zu einem einzigen Stab zusammengelegt werden, wie in Fig. 11 gezeigt ist. Der übrige Aufbau der Federvorrichtung ist jedoch derselbe wie in Fig. 10.

Es sind noch viele weitere Federvorrichtungen denkbar, die aus den Grundelementen abgeleitet werden und sich dadurch auszeichnen, dass die bewegbare Kraftangriffseite eine nahezu gleichmässig federnde ebene Fläche darstellt, die bei mindestens zwei parallel angeordneten Reihen von Grundelementen eine seitliche Eigenstabilität aufweist. Da bei allen Ausführungsformen die Glieder versetzt zueinander angeordnet sind, können sie sich bei der Durchfederung nicht behindern, so dass sie praktisch die gesamte Bauhöhe der Federvorrichtung als Durchbiegeweg zur Verfügung haben.

Die Glieder des erfindungsgemässen Federelementes können aus verschiedenen Materialien hergestellt sein, z. B. aus Kunststoff, Holz oder Metall. Zudem können sie profiliert oder als flache Hohlkörper ausgebildet sein.

Die Einsatzmöglichkeiten der erfindungsgemässen Federelemente sind praktisch unbegrenzt. Ausser den genannten Anwendungen als Untermatratze, als Leitplanke und als Rohraufhängung können die Federvorrichtungen zum Schutz von Schiffen an Hafenmauern angeordnet werden. Auch die federnde Aufstellung von Maschinen, selbst bei sehr hohen Gewichten, ist möglich.

## Patentansprüche

1. Federelement zum Abfedern einer auf das Element einwirkenden Kraft gegenüber einer entgegen dieser Kraft wirkenden Stützkraft, das aus wenigstens einem geschlossenen Stabzug (1, 3, 1, 3) besteht, von dem wenigstens zwei einander gegenüberliegende verbundene Stäbe (3) mittels eines geradlinig ausgebildeten Verbindungsstabes (2) an Punkten starr miteinander verbunden sind, die sich von den Endpunkten der verbundenen Stäbe (3) im Abstand befinden und bei dem die eine Kraft an wenigstens einem die Endpunkte der beiden verbundenen Stäbe (3) verbindenden Stab (1), die andere Kraft an dem Verbindungsstab (2) angreift sowie die Kräfte in einem Winkel zu der durch den Stabzug gebildeten Fläche wirken und wenigstens eine Kraft an einem solchen Punkt des Verbindungsstabes (2) bzw. des verbindenden Stabes (1) angreift, der sich von dessen Verbindung mit dem verbundenen Stab (3) im Abstand befindet, und bei dem von den drei Gliedern bzw. Gliederpaaren : A) verbundene Stäbe (3), B) verbindende Stäbe (1) und C) Verbindungsstab (2) wenigstens zwei Glieder bzw. Gliederpaare federnd ausgebildet sind.

2. Federelement nach Anspruch 1, dadurch gekennzeichnet, dass der Stabzug (1, 3, 1, 3) und der Verbindungsstab (2) in einer Ebene liegen.

3. Federelement nach Anspruch 1, dadurch gekennzeichnet, dass der Verbindungsstab (2) in einer Lage über derjenigen des Stabzuges (1, 3, 1, 3) verläuft.

4. Federelement nach einem der Ansprüche 1 bis 3, dadurch gekennzeichnet, dass mehrere geschlossene Stabzüge (1, 3, 1, 3) leiterartig aneinander gereiht sind, wobei zwei benachbarte Stabzüge (1, 3, 1, 3) jeweils einen verbundenen Stab (3) des Stabzuges (1, 3, 1, 3) gemeinsam haben und die verbindenden Stäbe (1) des Stabzuges (1, 3, 1, 3) als Leiterholme durchgehen.

5. Federelement nach einem der Ansprüche 1 bis 3, dadurch gekennzeichnet, dass mehrere geschlossene Stabzüge (1, 3, 1, 3) leiterartig aneinander gereiht sind, wobei zwei benachbarte Stabzüge (1, 3, 1, 3) jeweils einen verbindenden Stab (1) des Stabzuges (1, 3, 1, 3) gemeinsam haben und die verbundenen Stäbe (3) des Stabzuges (1, 3, 1, 3) als Leiterholme durchgehen.

6. Federelement nach Anspruch 4 oder 5, dadurch gekennzeichnet, dass wenigstens zwei Folgen leiterartig aneinander gereihter Stabzüge (1, 3, 1, 3) in der Fläche nebeneinander angeordnet sind, wobei zwei benachbarte Leiternfolgen jeweils einen durchgehenden verbundenen Stab (3) des Stabzuges (1, 3, 1, 3) und/oder verbindenden Stab (1) des Stabzuges (1, 3, 1, 3) gemeinsam haben.

7. Federelement nach Anspruch 4 oder 5, dadurch gekennzeichnet, dass wenigstens zwei Folgen leiterartig aneinander gereihter Stabzüge (1, 3, 1, 3) in der Fläche im Abstand (a) voneinander angeordnet sind, wobei die verbindenden Stäbe (1) der Stahzüge (1, 3, 1, 3) von einem Stabzug zum anderen durchgehen und den Abstand (a) überbrücken.

## Claims

1. Spring element for elastically accepting a force acting on said spring element, said force opposing a supporting force acting in the direction opposite said force, said spring element comprising at least one closed figure comprising bars (1, 3, 1, 3) of which at least two opposed connected bars (3) are rigidly connected with one another at two points by means of a straight-lined connection bar (2), said points being located at a distance from the end points of the connected bars (3), and the one force acting on said spring element on at least one bar (1) connecting the end points of the two connected bars (3), the other force acting on the connection bar (2) and the forces acting in an angle to the plane formed by said closed figure comprising bars, and at least one force acting at such a point of the connection bar (2) or of the connecting bar (1) that is located at a distance from the connection of said connection or connecting bar with the connected bar (3), and wherein of three members or member pairs of said spring element : A) connected bars (3), B) connecting bars (1) and C) connection bar (2) at least two members or member pairs being of resilient construction.

2. Spring element as claimed in claim 1, wherein the figure comprising bars (1, 3, 1, 3) and the connection bar (2) are located in one and the same plane.

3. Spring element as claimed in claim 1, wherein the connection bar (2) is located in a plane above that of the closed figure comprising bars (1, 3, 1, 3).

4. Spring element as claimed in any one of claims 1 to 3, wherein several closed figures comprising bars (1, 3, 1, 3) are connected ladderlike in line, each of two adjacent figures comprising bars (1, 3, 1, 3) having a connected bar (3) of the figure comprising bars (1, 3, 1, 3) in common and the connecting bar (1) of the figure comprised of bars (1, 3, 1, 3) extending uninterruptedly across said figures comprising bars in the manner of ladder rails.

5. Spring element as claimed in any one of claims 1 to 3, wherein several closed figures comprising bars (1, 3, 1, 3) are connected ladderlike in line, each of two adjacent figures comprising bars (1, 3, 1, 3) having a connecting bar (1) of the figure comprising bars (1, 3, 1, 3) in common and the connected bars (3) of the figure comprising bars (1, 3, 1, 3) extending uninterruptedly across said figures comprising bars in the manner of ladder rails.

6. Spring element as claimed in claim 4 or 5, wherein at least two successions of figures comprising bars (1, 3, 1, 3) connected in line are arranged in a plane adjacent to one another, each of two adjacent ladder successions having an uninterrupted connected bar (3) of the figure comprising bars (1, 3, 1, 3) and/or connecting bar (1) of the figure comprising bars (1, 3, 1, 3) in common.

7. Spring element as claimed in claim 4 or 5, wherein at least two successions of figures comprising bars (1, 3, 1, 3) are arranged in a plane at a distance (a) from one another, the connecting bars (1) of the figure comprising bars (1, 3, 1, 3) extending across one figure comprising bars to and across the other, thereby bridging the span (a).

## Revendications

1. Elément élastique destiné à supporter élastiquement une force agissant sur ledit élément élastique, ladite force opposant une force de réaction agissant en direction inverse, ledit élément élastique comprend au moins une structure fermée comprenant des barres (1, 3, 1, 3), dont deux, au moins, l'une en face de l'autre (3) sont reliées solidement l'une à l'autre en deux points par l'intermédiaire d'une barre de liaison (2) de forme rectiligne, lesdits points étant placés en arrière des extrémités des barres reliées (3), et une force agissant sur ledit élément élastique, sur au moins une barre (1) reliant les extrémités des deux barres reliées (3). L'autre force agissant sur la barre de raccordement (2) et les forces selon un angle par rapport au plan formé par ladite structure fermée comprenant des barres, et au moins une force étant appliquée à un point de la barre de raccordement (2) ou de la barre de liaison (1), point est placé à distance de la connexion de ladite barre de liaison ou de raccordement avec la barre reliée (3), et pour lequel des trois composants ou paires de composants dudit élément élastique : A) barres reliées (3), B) barre de liaison (1) et barres de raccordement (2) au moins 2 composants ou paires d'éléments sont élastiques.

2. Elément élastique d'après la revendication 1, caractérisé en ce que la structure comprenant des barres (1, 3, 1, 3) et la barre de raccordement (2) sont placées dans un et le même plan.

3. Elément élastique d'après la revendication 1, caractérisé en ce que la barre de raccordement (2) est placée dans un plan situé au-dessus de celui défini par la structure fermée comprenant des barres (1, 3, 1, 3).

4. Elément élastique d'après n'importe laquelle des revendications 1 à 3, caractérisé en ce que plusieurs structures comprenant des barres (1, 3, 1, 3) sont assemblées en ligne comme des échelles, de manière que deux structures adjacentes (1, 3, 1, 3) aient toujours en commun une barre reliée (3) de la structure (1, 3, 1, 3) et que la barre de liaison (1) de la structure (1, 3, 1, 3) traverse sans interruption toutes lesdites structures, comprenant des barres, comme les montants d'une échelle.

5. Elément élastique d'après n'importe laquelle des revendications 1 à 3, caractérisé en ce que plusieurs structures comprenant des barres (1, 3, 1, 3) sont assemblées en ligne comme des échelles, de manière que deux structures adjacentes (1, 3, 1, 3) aient toujours en commun une barre de liaison (1) de la structure (1, 3, 1, 3) et que les barres reliées (3) de la structure (1, 3, 1, 3) traversent sans interruption toutes lesdites structures, comprenant les barres, comme les montants d'une échelle.

6. Elément élastique d'après une des revendications 4 ou 5, caractérisé en ce qu'au moins deux suites de structures fermées comprenant des barres (1, 3, 1, 3) sont assemblées en ligne dans un plan adjacentes l'une à l'autre comme des échelles, de manière à ce que chacune des deux successions de barres aient en commun une barre continue reliée (3) de la structure comprenant des barres (1, 3, 1, 3) et/ou une barre de liaison (1) de ladite structure comprenant des barres.

7. Elément élastique d'après une des revendications 4 ou 5, caractérisé en ce qu'au moins deux suites de structures fermées comprenant des barres (1, 3, 1, 3) sont assemblées dans un plan à la distance de (a) de l'une à l'autre, les barres de liaison (1) de la structure comprenant des barres (1, 2, 1, 3) traversant une structure et donc pontant l'interstice (a).

FIG. 1

FIG. 2

FIG. 3

FIG. 4

FIG. 5

FIG. 6

FIG. 7

FIG. 8

FIG. 9

FIG. 10

FIG. 11

FIG. 12